# EUROPÄISCHE PATENTSCHRIFT

(11) **EP 2 504 739 B1**
(45) Veröffentlichungstag und Bekanntmachung des Hinweises auf die Patenterteilung: **22.07.2015**
(21) Anmeldenummer: 10771344.8
(22) Anmeldetag: 26.10.2010
(51) Int. Cl.: G05B 19/042

(54) **STEUERUNGSSYSTEM ZUM STEUERN VON SICHERHEITSKRITISCHEN UND NICHTSICHERHEITSKRITISCHEN PROZESSEN**
CONTROL SYSTEM FOR CONTROLLING SAFETY-CRITICAL AND NON-SAFETY-CRITICAL PROCESSES
SYSTÈME DE COMMANDE POUR COMMANDER DES PROCESSUS CRITIQUES SUR LE PLAN DE LA SÉCURITÉ ET DES PROCESSUS NON CRITIQUES SUR LE PLAN DE LA SÉCURITÉ

(30) Priorität: 23.11.2009 DE 102009054157
(43) Veröffentlichungstag der Anmeldung: 03.10.2012
(73) Patentinhaber: ABB AG, 68309 Mannheim (DE)
(72) Erfinder: NEUPÄRTL, Heinrich, 68623 Lampertheim (DE); GAUB, Gernot, 68766 Hockenheim (DE); STOLL, Jürgen, 68782 Brühl (DE); BLEI, Brigitte, 10405 Berlin (DE); VERYHA, Yauheni, 68199 Mannheim (DE)
(86) Internationale Anmeldenummer: PCT/EP2010/006519
(87) Internationale Veröffentlichungsnummer: WO 2011/060871

(56) Entgegenhaltungen:
- DE-A1- 10 353 950
- DE-A1- 19 616 166
- DE-A1-102004 056 363
- DE-A1-102005 009 795

## Beschreibung

Die Erfindung betrifft ein, vorzugsweise modular aufgebautes, Steuerungssystem, welches zum Steuern von sicherheitskritischen und nichtsicherheitskritischen Prozessen und/oder Anlagenkomponenten gemäß Anspruch 1 vorgesehen ist. Die Erfindung findet insbesondere Verwendung in der Prozessautomation oder Maschinensteuerung.

Für Automatisierungssysteme zur Steuerung eines technischen Prozesses oder einer technischen Anlage ist es oftmals erforderlich besondere sicherheitskritische Prozess- oder Anlagenkomponenten getrennt von nichtsicherheitskritischen Komponenten zu steuern.

In der DE 10 2005 009 795 A1 ist ein Mikroprozessorsystem für eine Maschinensteuerung in sicherheitskritischen Anwendungen beschrieben, dass zwei Bereiche umfasst. Ein erster Bereich ist für nicht sicherheitskritische bzw. nicht sicherheitsgerichtete Funktionen vorgesehen und umfasst einen Hauptprozessor, einen Programm- und Datenspeicher, eine Eingabe/ Ausgabeeinheit und einen Bus zur Verbindung der vorgenannten Komponenten miteinander. Ein zweiter Bereich ist für sicherheitskritische bzw. sicherheitsgerichtete Funktionen vorgesehen und umfasst einen Sicherheitsprozessor mit einem eigenen Programm- und Datenspeicher, der ebenfalls an den Bus angeschlossen ist.

Mittels einer sicheren Übertragungsstrecke werden Programme und Daten in den Datenspeicher des Sicherheitsprozessors geladen, dessen Funktion darauf beruht, dass er im Zusammenwirken mit weiteren sicherheitsgerichteten Komponenten, wie beispielsweise sicherheitsgerichteten Eingabe/ Ausgabeeinheiten, die Anlage oder den Prozess im Konfliktfall in einen "sicheren" Zustand fährt.

In der DE 103 53 950 A1 ist ein weiteres Steuerungssystem zum Steuern von sicherheitskritischen Prozessen mit einem Feldbus, einem Busmaster zum Steuern der Kommunikation über den Feldbus und einer Signaleinheit zum Verknüpfen mit dem sicherheitskritischem Prozess beschrieben. Der Busmaster und die Signaleinheit sind über den Feldbus miteinander verbunden. Über den Feldbus wird eine Kommunikation der Signaleinheit mit dem Busmaster bereitgestellt. Weiterhin ist eine erste Steuereinheit zum Steuern des sicherheitskritischen Prozesses vorgesehen, wobei die Signaleinheit und die erste Steuereinheit sicherheitsbezogene Einrichtungen für eine fehlersichere Kommunikation aufweisen, um die sicherheitskritischen Prozesse zu steuern. Die erste Steuereinheit ist feldbusunabhängig an den Busmaster anschließbar.

Die vorab beschriebenen sicherheitsgerichteten Steuersysteme sind für einen Einsatz in modular aufgebauten Steuerungssystemen, wie sie beispielsweise in der DE 10 2004 056 363 A1 beschrieben sind, nicht vorgesehen bzw. nur mit einem zusätzlichen Aufwand integrierbar, da beispielsweise Kommunikationsmodule, Schnittstellen, Spannungsversorgungen und Überwachungsfunktionen an die vorgegebenen Sicherheitskriterien anzupassen sind. Dazu müssen diese Komponenten ausgetauscht und mit einer neuen Software ausgerüstet werden, wodurch erhebliche Kosten entstehen.

Auch gestaltet es sich oftmals als schwierig, die sicherheitskritischen Funktionen von den nicht sicherheitskritischen Funktionen eindeutig zu trennen.

Der Erfindung liegt demgemäß die Aufgabe zugrunde, ein, vorzugsweise modular aufgebautes, Automatisierungssystem zum Steuern von sicherheitskritischen und nichtsicherheitskritischen Prozessen und/oder Anlagenkomponenten anzugeben, welches vorgenannte Nachteile vermeidet. Insbesondere soll das erfindungsgemäße Steuersystem dafür geeignet sein, ein vorhandenes modular aufgebautes nicht sicheres Steuersystem mit einen sicherheitsgerichteten Controller auf einfache und kostengünstige Weise auszustatten.

Diese Aufgabe wird erfindungsgemäß durch ein Steuerungssystem der eingangs genannten Art mit den im Anspruch 1 angegebenen Merkmalen gelöst. Vorteilhafte Ausgestaltungen und Verbesserungen der erfindungsgemäßen Einrichtung sind in weiteren Ansprüchen und in der Beschreibung angegeben.

Das erfindungsgemäße, vorzugsweise modular aufgebaute Steuersystem zum Steuern von sicherheitskritischen und nichtsicherheitskritischen Prozessen und/oder Anlagenkomponenten umfasst wenigstens eine erste Steuereinheit, die für die Steuerung des nicht sicherheitskritischen Prozesses und/oder der nicht sicherheitskritischen Anlagenkomponenten vorgesehen ist, wenigstens eine Eingabe-/ Ausgabeeinheit, die über einen internen Ein- /Ausgabebus mit der ersten Steuereinheit verbunden ist, und optional wenigstens einem Kommunikationskoppler, der über einen internen Kopplerbus mit der ersten Steuereinheit verbunden ist und/oder über einen Feldbus mit weiteren dezentralen Einheiten, wie beispielsweise Ein-/ Ausgabeeinheiten und/oder Remote Stationen, verbindbar ist.

Der Kommunikationskoppler ist vorzugsweise als Feldbus-Masterkoppler ausgeführt.

Erfindungsgemäß ist wenigstens eine zweite Steuereinheit, auch als Safety Controller bezeichnet, für die Steuerung des sicherheitskritischen Prozesses und/oder der sicherheitskritischen Anlagenkomponenten vorgesehen, wobei der Safety Controller zur Bereitstellung der sicherheitsgerichteten Funktionen wenigstens zwei vorzugsweise als Mikroprozessor ausgeführte Verarbeitungseinheiten und zur Datenübertragung über den internen Kopplerbus einen ersten, vorzugsweise als Dual-Port RAM ausgeführten Speicher, aufweist. Der Dual-Port RAM im Safety Controller ist so ausgeführt, dass an seinen beiden Zugriffsseiten gleichzeitige Lese- und/oder Schreibzugriffe möglich sind, so dass ein gleichzeitiger Zugriff für zwei ansonsten getrennte Systeme möglich ist, die mit gemeinsamen Daten arbeiten ohne dass sich die ansonsten getrennten Systeme gegenseitig in der Zugriffsgeschwindigkeit einschränken.

Der Safety Controller kommuniziert über sein Dual-Port RAM, auch erster Dual-Port RAM genannt, und den internen Kopplerbus über die nichtsicherheitskritische erste Steuereinheit direkt mit weiteren Kommunikationskopplern. Dabei werden zunächst die von der zweiten Steuereinheit bereitgestellten Daten über den ersten Dual-Port RAM des Safety Controllers und den internen Kopplerbus an die erste Steuereinheit übertragen. Die erste Steuereinheit übermittelt dann die von der zweiten Steuereinheit bereitgestellten Daten an den Kommunikationskoppler über den internen Kopplerbus und einen weiteren im Kommunikationskoppler integrierten Dual-Port RAM.

Ein solches modular aufgebautes Steuerungssystem mit einer ersten Steuereinheit für die Steuerung von nicht sicherheitskritischen Anwendungen und einer zweiten Steuereinheit (Safety Controller) für die Steuerung von sicherheitskritischen Anwendungen kann flexibel in unterschiedlicher Funktion eingesetzt werden, beispielsweise als Steuerungssystem eines größeren Automatisierungssystems, als dezentrale Verarbeitungseinrichtung in einem solchen dezentralisierten größeren Automatisierungssystem, oder als Stand-alone Automatisierungsgerät in Verbindung mit den lokal ankoppelbaren Einausgabegeräten oder als zentrales Automatisierungsgerät.

Ein besonderer Vorteil des erfindungsgemäßen Steuerungssystems beruht auf einer Reduzierung der Schnittstellen für die Kommunikation der jeweiligen Steuereinheiten für die sicherheitskritischen und nicht sicherheitskritischen Funktionen.

Durch den Einsatz des Safety Controllers für die Steuerung des sicherheitskritischen Prozesses oder der sicherheitskritischen Anlagenkomponenten und der damit verbundenen Trennung der Funktionen zwischen der ersten, nichtsicherheitsgerichteten Steuereinheit und des Safety Controllers, werden im Safety Controller die vorhandene Kommunikationsschnittstellen zur nichtsicherheitsgerichtete Steuereinheit wiederverwendet, was zur deutlichen Vereinfachung des Safety Controller Designs führt. Dabei erweist es sich als vorteilhaft, dass mit den verwendeten Dual-Port RAM's vordefinierten Schnittstellen zur Verfügung gestellt werden.

Ein weiterer Vorteil des erfindungsgemäßen Steuersystems ergibt sich daraus, dass ein, vorzugsweise modular aufgebautes, Steuersystem für nicht sicherheitskritische Anwendungen in einfacher und kostengünstiger Weise ohne umfangreichen Hardwareaufwand auch für sicherheitskritische Anwendungen ertüchtigt werden kann, indem für die Anwendung des Steuerungssystems auch für sicherheitskritische Anwendung die vorhandene Hardware nur um die zweite Steuereinheit (Safety Controller) mit ihren wenigstens zwei Prozessoren, dem wenigstens einen Dual-Port RAM und dem internen Kopplerbus zu ergänzen ist.

Dabei übernimmt die nichtsicherheitsgerichtete Steuereinheit die Aufgabe die sicherheitsgerichteten Telegramme aus dem Safety Controller des Steuerungssystems über den internen Kopplerbus und den internen Ein-/ Ausgabebus bzw. die als Feldbus-Master-Koppler ausgeführten Kommunikationskoppler bei einem System-Setup an die sicherheitsgerichteten Ein-/ Ausgabeeinheiten unter Verwendung des sogenannten "Black Channel Kommunikationsprinzips" zu übergeben. Das Black Channel Kommunikationsprinzip ist beispielsweise aus "PROFIsafe - Profile for Safety Technology on PROFIBUS DP and PROFINET IO Profile part, related to IEC 61784-3-3 Specification for PROFIBUS and PROFINET. Version 2.4, March, 2007, Order No: 3.192b" bekannt.

Die Feldbus-Master-Koppler sind weiterhin dafür vorgesehen, die sicherheitsgerichteten Telegramme von und zu den dezentralen sicherheitsgerichteten Ein-/ Ausgabemodulen und/oder zu den Remote Stationen unter Nutzung des vorgenannten "Black Channel Kommunikationsprinzips" zu übertragen. Dazu werden die Telegramme über sogenannte Feldbus- Slave zu den sicherheitsgerichteten Ein/Ausgabeeinheiten geführt. Die Feldbus- Slaves können dazu direkte nichtsicherheitsgerichtete Ein-/Ausgabekanäle aufweisen.

Im Safety Controller wird eine sogenannte Sicherheitsprogrammlogik ausgeführt und im Controller für die nichtsicherheitskritischen Anwendungen wird davon getrennt eine nicht sicherheitsgerichtete Programmlogik ausgeführt. Der Datenaustausch der Daten zwischen dem Safety Controller und der nichtsicherheitsgerichteten ersten Steuereinheit für die sicherheitskritischen Anwendungen erfolgt mittels der vordefinierten Schnittstelle über den Dual-Port RAM und den Kopplerbus.

Von den beiden Prozessoren des Safety Controllers ist nur ein Prozessor über den Dual-Port RAM direkt mit dem internen Kopplerbus verbunden. Die Prozessoren des Safety Controllers sind so ausgeführt, dass sie sich gegenseitig überwachen und synchronisieren. Die Überwachungs- und Synchronisationsmechanismen können beispielsweise nach "PROFIsafe - Profile for Safety Technology on PROFIBUS DP and PROFINET IO Profile part, related to IEC 61784-3-3 Specification for PROFIBUS and PROFINET. Version 2.4, March, 2007, Order No: 3.192b" oder ähnlich ausgeführt werden.

Auch kann im Safety Controller eine andere interne Sicherheitsarchitektur als die vorab beschriebene eine 1oo2 (1 von 2)- Architektur, bestehend aus zwei Prozessoren, vorgesehen sein, beispielsweise eine 1oo3- Architektur etc. In der beschriebenen 1oo2- Architektur ist der erste Prozessor, welcher direkt auf das Dual-Port RAM zugreift, nicht in der Lage ein cyclic redundancy checksum (CRC - ein Verfahren zur Bestimmung eines Prüfwerts für Daten, um Fehler bei der Übertragung oder Speicherung erkennen zu können) zu ermitteln, das zum Generieren von gültigen Telegramme über die Schnittstelle des Dual-Port RAMs notwendig ist. Diese CRC-Ermittlung kann nur von dem redundanten Prozessor durchgeführt und zum ersten Prozessor mitgeteilt werden. Hiermit wird sichergestellt, dass beide Prozessoren an gültigen Telegrammen mitwirken. Dies ist erforderlich, um die Sicherheit des Systems bei Ausfall oder fehlerhafter Funktionsweise eines der beiden Prozessoren des Safety Controllers zu gewährleisten.

Anhand der in der folgenden Figuren dargestellten Ausführungsbeispielen sollen die Erfindung sowie vorteilhafte Ausgestaltungen und Verbesserungen der Erfindung näher erläutert und beschrieben werden.

Es zeigen:
- **Fig.** 1: eine beispielhafte Ausführungsform des modular aufgebauten erfindungsgemäßen Steuersystems, welches für die Steuerung sicherheitsgerichteter und nichtsicherheitsgerichteter Prozesse vorgesehen ist,
- **Fig.** 2: eine detaillierte Ausführungsform des erfindungsgemäßen Steuerungssystems, und
- **Fig.** 3: eine Ausführungsform der zweiten Steuereinheit 1oo2 Systemarchitektur.

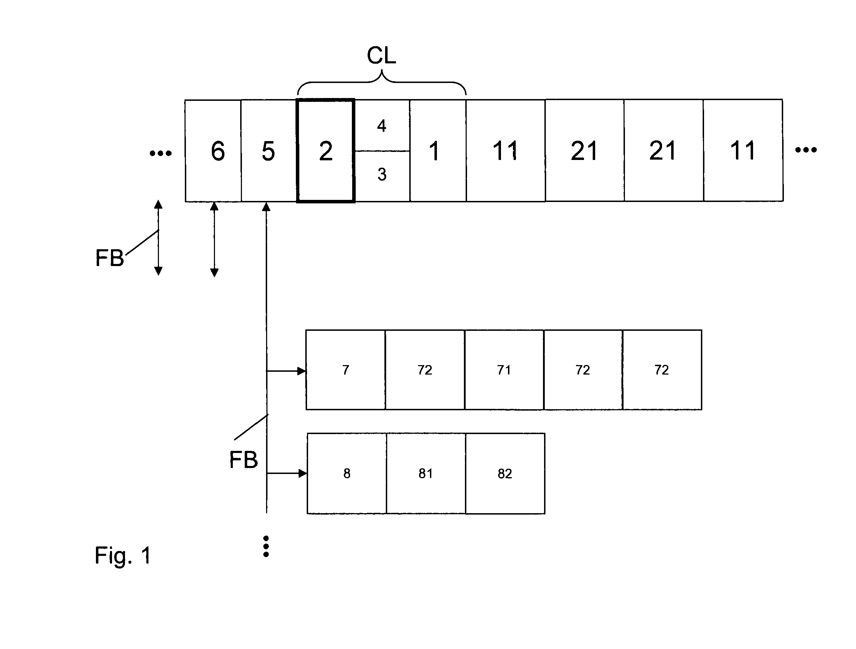

**Fig.** 1 zeigt ein modular aufgebautes Steuer- bzw. Automatisierungssystem mit einer Steuereinheit 1, die für die Steuerung von nicht sicherheitskritischen Prozessen und/oder nicht sicherheitskritischen Anlagenkomponenten vorgesehen ist, mit daran angeschlossenen Modulen der zentralen Eingabe-/ Ausgabeeinheiten 11, 21, die über einen internen Ein- /Ausgabebus mit der ersten Steuereinheit verbunden sind, und mit einem als Feldbus-Masterkoppler ausgeführtem Kommunikationskopplermodul 5, 6, welches die Kommunikation über den Feldbus FB mit einer Vielzahl von dezentralen Feldbus-Slaves 7, 8 und an denen angeschlossenen Eingabe-/Ausgabeeinheiten 71, 72, 81, 82 steuert.

Erfindungsgemäß ist wenigstens eine zweite Steuereinheit 2 (Safety Controller) für die Steuerung von sicherheitskritischen und/oder sicherheitskritischen Anlagenkomponenten vorgesehen. Der Safety Controller 2 kommuniziert über sein Dual-port RAM und den internen Kopplerbus B1 und über die nichtsicherheitskritische Steuereinheit 1 direkt mit weiteren Kommunikationskopplern 5, 6.

Die Ein- und Ausgabeeinheiten umfassen sowohl sichere Einheiten 21, 72, 82 als auch nicht sichere Einheiten 11, 71, 81, wobei die nicht sicheren Einheiten 11, 71,81 von der ersten Steuereinheit 1 ohne Sicherheitsfunktion und die sicheren Einheiten 21, 72, 81 vom Safety Controller mit Sicherheitsfunktion gesteuert werden.

Die Steuereinheiten 1, 2 kommunizieren miteinander über einen internen Kopplerbus B1 und einen in der zweite Steuereinheit 2 integrierten Dual-Port-RAM DPR1 sowie über den internen Kopplerbus B1 und Kommunikationskopplermodul 5, 6 mit den an den Feldbus FB angeschlossenen dezentralen Einheiten.

Die erste Steuereinheit 1 bildet einer Spannungsversorgungseinheit 3 und einer Anzeige- und/oder Bedieneinheit 4 ein Modul für die Zentraleinheit CL des Steuerungssystems.

Sowohl die direkt mit dem Modul für die Zentraleinheit CL verbundenen Module der zentralen Eingabe-/ Ausgabeeinheiten 11, 21 als auch die Module der dezentralen Einheiten 7, 8, 71, 72, 81, 82 können wie vorab schon ausgeführt entsprechend ihrer Funktion sowohl als sicherheitsgerichtete als auch nicht sicherheitsgerichtete Geräte ausgeführt sein.

Die Zentraleinheit CL kann, wie auch die die Eingabe-/ Ausgabeeinheiten 11, 21 und die Kommunikationskoppler 5, 6, mittels eines Modulträgers auf einer unterschiedlich ausbaufähigen Grundplatte angeordnet sein, wobei die Eingabe-/ Ausgabeeinheiten 11, 21 direkt an die Zentraleinheit CL und die Kommunikationskoppler 5 ankoppelbar sind. Die Grundplatte weist weiterhin wenigstens einen Steckplatz für einen Koppler zum Feldbusanschluss für eine Standard-Feldbusverbindung zu den dezentralen Einheiten 7, 8 und/oder Stationen auf.

In einer besonderen Ausgestaltung ist die Grundplatte auf eine Norm- Hutschiene aufgeschnappt, wobei wenigstens eine der Eingabe-/ Ausgabeeinheiten 11, 21 ebenfalls auf die Hutschiene aufschnappbar und mit der jeweiligen Grundplatte elektrisch und mechanisch zusammensteckbar ist.

Vorteilhaft erweist sich weiterhin, dass Module der Zentraleinheit CL, der Eingabe-/ Ausgabeeinheiten 11, 21 und der Kommunikationskoppler 5, 6 alle untereinander kabellos über Steckverbindungen elektrisch verbindbar oder verbunden sind. Vorzugsweise sind die Zentraleinheit CL, die Eingabe-/ Ausgabeeinheiten 11, 21 und die Kommunikationskoppler 5, 6 jeweils mittels Steck- und/oder Rastmitteln lösbar miteinander verbindbar oder verbunden.

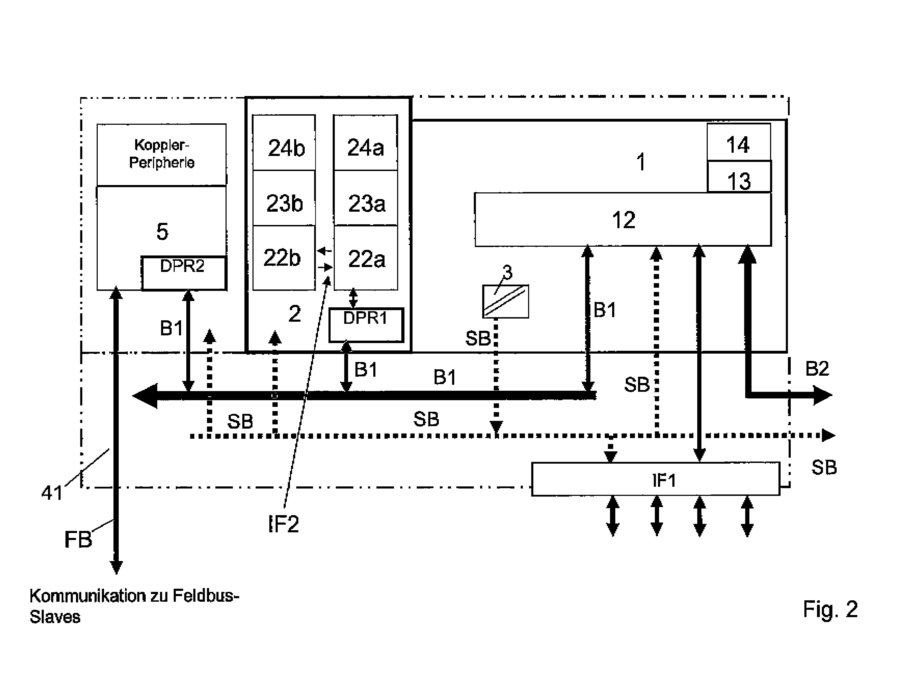

Fig. 2 zeigt eine detaillierte Ausführungsform des modular aufgebautem erfindungsgemäßen Steuerungssystems umfassend einem Klemmenblock 41 mit integrierter Ethernet- und/oder serieller Schnittstelle IF1 und die erste Steuereinheit 1, die über den internen Ein- /Ausgabekopplerbus B1 mit der als Safety Controller ausgeführten zweiten Steuereinheit und den Kommunikationskoppler 5 kommuniziert. Das Modul der ersten Steuereinheit 1 ist mit einer Spannungsversorgungseinheit 3 ausgestattet, welche über eine Verbindungsleitung SB mit der ersten und der zweiten Steuereinheit 1, 2 sowie dem Kommunikationskoppler 5 elektrisch verbunden ist. An die Verbindungsleitung SB sind auch weitere auf der Grundplatte angeordnete Geräte, wie beispielsweise die zentralen Eingabe-/ Ausgabeeinheiten 11, 21, elektrisch anschließbar.

Die erste Steuereinheit 1 weist neben einem Taktgeber 14 und einem Speicher 13, einen ersten Mikroprozessor 12 auf, der über den internen Ein- /Ausgabekopplerbus B1 mit dem wenigstens einem Kommunikationskoppler 5 über einen im Kommunikationskoppler integrierten weiteren Dual-Port RAM DPR2 kommuniziert. Die Verbindung zu den zentralen Eingabe-/ Ausgabeeinheiten 11, 21 (nicht in der Fig. 2 aufgeführt) wird über den internen Ein- /Ausgabebus B2 realisiert.

Für die Anwendung des Steuerungssystems auch für sicherheitskritische Anwendung ist auf der Grundplatte die zweite Steuereinheit 2 vorgesehen, die wenigstens zwei weitere, als Sicherheitsprozessoren ausgeführte, Verarbeitungseinheiten 22a, 22b mit zugeordneten Speichern 23a, 23b und Taktgebern 24a, 24b aufweist. Die Prozessoren 22a, 22b synchronisieren sich untereinander über eine weitere Schnittstelle IF2. Der Aufbau der Prozessoren 22a, 22b und ihre Funktionsweise ist aus dem einschlägigen Stand der Technik bekannt.

In der beschriebenen 1oo2- Architektur ist der erster Prozessor 22a, welcher direkt auf das Dual-Port RAM DPR1 zugreift, nicht in der Lage ein Cyclic Redundancy Checksum (CRC) zu ermitteln, das zum Generieren von gültigen Telegramme über die Schnittstelle des Dual-Port RAMs DPR1 notwendig ist. Diese CRC-Ermittlung kann nur von dem redundanten Prozessor 22b durchgeführt und zum ersten Prozessor 22a mitgeteilt werden. Hiermit wird sichergestellt, dass beide Prozessoren 22a, 22b an gültigen Telegrammen mitwirken. Dies ist erforderlich, um die Sicherheit des Systems beim Ausfall oder fehlerhafter Funktionsweise eines der beiden Prozessoren 22a, 22b des Safety Controllers 2 zu gewährleisten.

Über den im Kommunikationskoppler 5 integrierten weiteren Dual-Port RAMDPR2 werden die sicherheitsgerichteten Telegramme vom Safety Controller 2 von und zu den dezentralen Ein-/ Ausgabeeinheiten 71, 72, 81, 82 und/oder zu den Remote Stationen unter Nutzung des vorgenannten "Black Channel Kommunikationsprinzips" übertragen. Dazu werden die Telegramme über den Feldbus FB und die Feldbus-Slaves 7, 8 zu den Ein- /Ausgabeeinheiten 71, 72, 81, 82 geführt.

Der Safety Controller 2 kommuniziert über sein Dual-Port RAM DPR1 und den internen Kopplerbus B1 über die nichtsicherheitskritische erste Steuereinheit 1 mit Kommunikationskoppler 5 via integrierten Dual-Port RAM DPR2. Die Kommunikation wird unter Nutzung des vorgenannten "Black Channel Kommunikationsprinzips" ausgeführt.

In den weiteren Prozessoren 22a, 22b des Safety Controllers 2 wird eine Sicherheitsprogrammlogik ausgeführt und im ersten Mikroprozessor 12 der ersten Steuereinheit 1 wird davon getrennt eine nicht sicherheitsgerichtete Programmlogik ausgeführt. Der Datenaustausch der Daten zwischen der als Safety Controller 2 und der ersten Steuereinheit 1 für die nicht sicherheitskritischen Anwendungen erfolgt mittels der vordefinierten Schnittstelle über den im Safety Controller angeordneten ersten Dual-Port RAM DPR1.

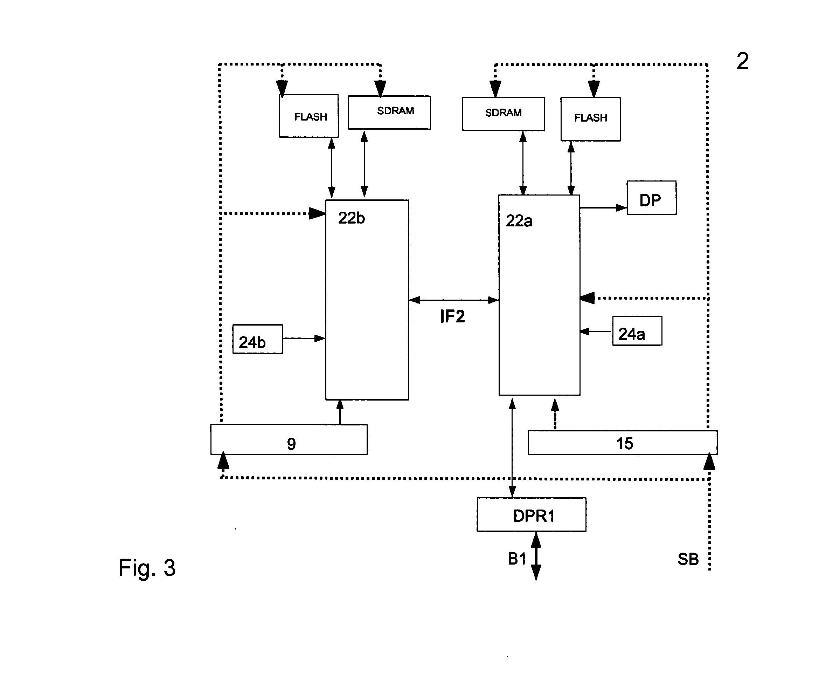

Fig. 3 zeigt eine Ausführungsform des Safety Controllers 2 als 1oo2 Systemarchitektur mit den Mikroprozessoren 22a, 22b, mit den jeweils eigenen mit den Prozessoren 22a, 22b zusammenwirkenden nullspannungssicheren Speichern FLASH, die vorzugsweise als Ablage für ein Anwenderprogramm vorgesehen sind, und den flüchtigen Speichern SDRAM, die vorzugsweise als Datenspeicher vorgesehen sind. Die Mikroprozessoren 22a, 22b arbeiten jeweils mit einem eigenen Taktgeber 24a, 24b zusammen. Weiterhin sind im Safety Controller 2 Anzeigemittel DP zur Anzeige von Zustands- und Fehlermeldungen vorgesehen, welche vorzugsweise nur mit dem ersten Prozessor 22a direkt verbunden sind.

Von den beiden Prozessoren 22a, 22b des Safety Controllers 2 ist nur der erste Prozessor 22a über den ersten Dual-Port RAM DPR1 direkt mit dem internen Kopplerbus B1 verbunden.

In einer vorteilhaften Ausgestaltung sind die Prozessoren 22a, 22b des Safety Controllers 2 sind so ausgeführt, dass sie sich gegenseitig überwachen. Dazu synchronisieren sich die Prozessoren 22a, 22b untereinander über die weitere Schnittstelle IF2. Die Überwachungs- und Synchronisationsmechanismen können beispielsweise nach "PROFIsafe - Profile for Safety Technology on PROFIBUS DP and PROFINET IO Profile part, related to IEC 61784-3-3 Specification for PROFIBUS and PROFI-NET. Version 2.4, March, 2007, Order No: 3.192b" oder ähnlich ausgeführt werden.

Die Spannungsversorgung SB sowohl für die beiden Prozessoren 22a, 22b, die Speicher FLASH, SDRAM als für die jeweils mit den Prozessoren 22a, 22b verbundenen Spannungsversorgungsüberwachungs- und Diagnoseeinheiten 9, 15 wird über die Verbindungsleitung SB bereitgestellt.

Für die im Safety Controller 2 befindlichen Prozessoren 22a, 22b ist jeweils eine separate Spannungsversorgungsüberwachungs- und Diagnoseeinheit 9, 15 vorgesehen.

## Patentansprüche

1. Steuerungssystem zum Steuern von sicherheitskritischen und nichtsicherheitskritischen Prozessen und/oder Anlagenkomponenten, welches vorzugsweise modular aufgebaut ist, mit wenigstens einer ersten Steuereinheit (1), die für die Steuerung des nicht sicherheitskritischen Prozesses und/oder der nicht sicherheitskritischen Anlagenkomponenten vorgesehen ist, mit wenigstens einer Eingabe/ Ausgabeeinheit (11), (21), die über einen internen Ein- /Ausgabebus (B2) mit der ersten Steuereinheit (1) verbunden ist, und mit wenigstens einem Kommunikationskoppler (5), (6), der über einen internen Kopplerbus (B1) mit der ersten Steuereinheit (1) verbunden ist und/oder über einen Feldbus (FB) mit weiteren dezentralen Einheiten (7), (8) verbindbar ist, wobei wenigstens eine zweite Steuereinheit (2) für die Steuerung des sicherheitskritischen Prozesses und/oder der sicherheitskritischen Anlagenkomponenten vorgesehen ist, die zweite Steuereinheit (2) zur Bereitstellung der sicherheitsgerichteten Funktionen wenigstens zwei Prozessoren (22a), (22b) und einen ersten Dual-Port RAM (DPR1) aufweist, wobei die zweite Steuereinheit (2) über den ersten Dual-Port RAM (DPR1) und den internen Kopplerbus (B1) mit dem ersten Steuereinheit (1) kommuniziert, **dadurch gekennzeichnet, dass**
- nur einer der beiden Prozessoren (22a), (22b) mit dem ersten Dual-Port RAM (DPR1) verbunden ist,
- die erste Steuereinheit (1) die Daten von der zweiten Steuereinheit (2) an den Kommunikationskoppler (5) über den internen Kopplerbus (B1) und einen weiteren im Kommunikationskoppler (5) integrierten Dual-Port RAM (DPR2) übermittelt.

2. Steuerungssystem nach Anspruch 1, **dadurch gekennzeichnet, dass** das Steuersystem modular aufgebaut ist.

3. Steuerungssystem nach Anspruch 1 oder 2, **dadurch gekennzeichnet, dass** die Eingabe/ Ausgabeeinheiten sichere Einheiten (21), (72), (82) als auch nicht sichere Einheiten (11), (71), (81) sind, wobei die nicht sicheren Einheiten (11), (71), (81) von der ersten Steuereinheit (1) und die sicheren Einheiten (21), (71), (82) von der zweiten Steuereinheit 2 steuerbar sind.

4. Steuerungssystem nach einem der vorstehenden Ansprüche, **dadurch gekennzeichnet, dass** der Kommunikationskoppler als Feldbus-Masterkoppler ausgeführt ist.

5. Steuerungssystem nach einem der vorstehenden Ansprüche, **dadurch gekennzeichnet, dass** der Feldbus-Master-Koppler dafür vorgesehen ist, die sicherheitsgerichteten Telegramme von und zu den dezentralen Ein-/ Ausgabemodulen (71), (72), (81), (82) und/oder zu den Remote Stationen unter Nutzung des Black Channel Kommunikationsprinzips zu übertragen, wobei die sicherheitsgerichteten Telegramme über Feldbus-Slaves (7), (8) zu den dezentralen Ein- / Ausgabeeinheiten (71), (72), (81), (82) geführt werden.

6. Steuerungssystem nach Anspruch 5, **dadurch gekennzeichnet, dass** die Feldbus-Slaves (7), (8) direkte nichtsicherheitsgerichtete Ein-/Ausgabekanäle aufweisen.

7. Steuerungssystem nach einem der Ansprüche 5 oder 6, **dadurch gekennzeichnet, dass** wenigstens eine dezentrale Ein- /Ausgabeeinheit (71), (72), (81), (82) mit den Feldbus- Slaves (7), (8) über den internen Ein-/ Ausgabebus angeschlossen ist.

8. Steuerungssystem nach einem der vorstehenden Ansprüche, **dadurch gekennzeichnet, dass** die Dual-Port RAM's (DPR1), (DPR2) vordefinierte Standardschnittstellen aufweisen.

9. Steuerungssystem nach einem der vorstehenden Ansprüche, **dadurch gekennzeichnet, dass** die Prozessoren (22a), (22b) der zweiten Steuereinheit (2) so ausgeführt sind, dass sie sich gegenseitig überwachen und synchronisieren.

10. Steuerungssystem nach einem der vorstehenden Ansprüche, **dadurch gekennzeichnet, dass** bei einem System-Setup die erste Steuereinheit (1) die sicherheitsgerichteten Telegramme aus der zweiten Steuereinheit (2) über den internen Kopplerbus (B1) und den internen Ein-/ Ausgabebus (B2) an die sicherheitsgerichteten Ein-/ Ausgabeeinheiten (21) unter Verwendung des Black Channel Kommunikationsprinzips übergibt.

11. Verwendung des Steuerungssystems nach einem der vorstehenden Ansprüche, als Steuerungssystem eines größeren Automatisierungssystems, als dezentrale Verarbeitungseinrichtung in einem solchen dezentralisierten größeren Automatisierungssystem, oder als Stand-alone Automatisierungsgerät in Verbindung mit den dezentral ankuppelbaren Einausgabegeräten oder als zentrales Automatisierungsgerät.

## Claims

1. Control system for controlling safety-critical and non-safety-critical processes and/or plant components which is preferably of modular construction, having at least one first control unit (1) which is provided for controlling the non-safety-critical process and/or the non-safety-critical plant components, having at least one input/output unit (11), (21) which is connected to the first control unit (1) via an internal input/output bus (B2) and having at least one communication coupler (5), (6) which is connected to the first control unit (1) via an internal coupler bus (B1) and/or can be connected to further decentralized units (7), (8) via a field bus (FB), wherein at least one second control unit (2) is provided for controlling the safety-critical process and/or the safety-critical plant components, the second control unit (2) has at least two processors (22a), (22b) and a first dual-port RAM (DPR1) for providing the safety-oriented functions, wherein the second control unit (2) communicates with the first control unit (1) via the first dual-port RAM (DPR1) and the internal coupler bus (B1), **characterized in that**
- only one of the two processors (22a), (22b) is connected to the first dual-port RAM (DPR1),
- the first control unit (1) transmits the data from the second control unit (2) to the communication coupler (5) via the internal coupler bus (B1) and a further dual-port RAM (DPR2) integrated in the communication coupler (5).

2. Control system according to Claim 1, **characterized in that** the control system is constructed to be modular.

3. Control system according to Claim 1 or 2, **characterized in that** the input/output units are safe units (21), (72), (82) and non-safe units (11), (71), (81), wherein the non-safe units (11), (71), (81) can be controlled by the first control unit (1) and the safe units (21), (71), (82) can be controlled by the second control unit (2).

4. Control system according to one of the preceding claims, **characterized in that** the communication coupler is constructed as a field bus master coupler.

5. Control system according to one of the preceding claims, **characterized in that** the field bus master coupler is provided for transmitting the safety-oriented messages from and to the decentralized input/output modules (71), (72), (81), (82) and/or to the remote stations by utilizing the Black Channel Communication principle, wherein the safety-oriented messages are conducted via field bus slaves (7), (8) to the decentralized input/output units (71), (72), (81), (82).

6. Control system according to Claim 5, **characterized in that** the field bus slaves (7), (8) have direct non-safety-oriented input/output channels.

7. Control system according to one of Claims 5 or 6, **characterized in that** at least one decentralized input/output unit (71), (72), (81), (82) is connected with the field bus slaves (7), (8) via the internal input/output bus.

8. Control system according to one of the preceding claims, **characterized in that** the dual-port RAMs (DPR1), (DPR2) have predefined standard interfaces.

9. Control system according to one of the preceding claims, **characterized in that** the processors (22a), (22b) of the second control unit (2) are constructed in such a manner that they monitor and synchronize one another.

10. Control system according to one of the preceding claims, **characterized in that** during a system setup, the first control unit (1) transfers the safety-oriented messages from the second control unit (2) via the internal coupler bus (B1) and the internal input/output bus (B2) to the safety-oriented input/output units (21) by using the Black Channel Communication principle.

11. Use of the control system according to one of the preceding claims as control system for a relatively large automation system, as decentralized processing facility in such a decentralized relatively large automation system or as stand-alone automation device in conjunction with the input/output devices which are coupleable in a decentralized manner, or as central automation device.

## Revendications

1. Système de commande pour commander des processus et/ou des composants d'installation critiques sur le plan de la sécurité et non critiques sur la plan de sécurité, lequel système est conçu de préférence de façon modulaire avec au moins une première unité de commande (1) qui est prévue pour la commande du processus non critique sur la plan de la sécurité et/ou de composants d'installation non critiques sur la plan de la sécurité, avec au moins une unité d'entrée/sortie (11), (21) qui est reliée par un bus entrée/sortie interne (B2) à la première unité de commande (1) et avec au moins un coupleur de communication (5), (6) qui est relié par un bus de coupleur interne (B1) à la première unité de commande (1) et/ou peut être relié par un bus de terrain (FB) à d'autres unités décentralisées (7), (8), pour lequel au moins une deuxième unité de commande (2) est prévue pour la commande du processus critique sur le plan de la sécurité et/ou de composants d'installation critiques sur le plan de la sécurité, la deuxième unité de commande (2) comporte au moins deux processeurs (22a), (22b) et une première mémoire vive à double accès (DPR1) pour la mise à disposition de fonctions orientées sur la sécurité, pour lequel la deuxième unité de commande (2) communique par la première mémoire vive à double accès (DPR1) et le bus de coupleur interne (B1) avec la première unité de commande (1), **caractérisé en ce que**
- seul un des deux processeurs (22a), (22b) est relié à la première mémoire vive à double accès (DPR1),
- la première unité de commande (1) transmet les données de la deuxième unité de commande (2) au coupleur de communication (5) par le bus de coupleur interne (B1) et une autre mémoire vive à double accès (DPR2) intégrée dans un autre coupleur de communication (5).

2. Système de commande selon la revendication 1, **caractérisé en ce que** l'unité de commande est conçue de façon modulaire.

3. Système de commande selon la revendication 1 ou 2, **caractérisé en ce que** les unités d'entrée/sortie sont des unités sécurisées (21), (72), (82) aussi bien que des unités non sécurisées (11), (71), (81), pour lequel les unités non sécurisées (11), (71), (81) peuvent être commandées par la première unité de commande (1) et les unités sécurisées (21), (71), (82)par la deuxième unité de commande (2).

4. Système de commande selon l'une quelconque des revendications précédentes, **caractérisé en ce que** le coupleur de communication est réalisé sous forme de coupleur maître de bus de terrain.

5. Système de commande selon l'une quelconque des revendications précédentes, **caractérisé en ce que** le coupleur principal de bus de terrain est prévu pour transmettre les télégrammes orientés sur la sécurité des et aux modules entrée/sortie décentralisés (71), (72), (81), (82) et/ou à des stations à distance en utilisant le principe de communication du Canal Noir, pour lequel les télégrammes orientés sur la sécurité sont guidés par des éléments asservis de bus de terrain (7), (8) vers les unités entrée/sortie décentralisées (71), (72), (81), (82).

6. Système de commande selon la revendication 5, **caractérisé en ce que** les éléments asservis de bus de terrain (7), (8) comportent des canaux entrée/sortie directs non orientés sur la sécurité.

7. Système de commande selon l'une quelconque des revendications 5 ou 6, **caractérisé en ce qu'**au moins une unité entrée/sortie décentralisée (71), (72), (81), (82) est raccordée aux éléments asservis de bus de terrain (7), (8) par le bus entrée/sortie interne.

8. Système de commande selon l'une quelconque des revendications précédentes, **caractérisé en ce que** les mémoires vives à double accès (DPR1), (DPR2) comportent des interfaces standard prédéfinies.

9. Système de commande selon l'une quelconque des revendications précédentes, **caractérisé en ce que** les processeurs (22a), (22b) de la deuxième unité de commande (2) sont réalisés de telle sorte qu'ils se surveillent et se synchronisent de façon réciproque.

10. Système de commande selon l'une quelconque des revendications précédentes, **caractérisé en ce que** lors d'une configuration de système, la première unité de commande (1) transmet les télégrammes orientés sur la sécurité à partir de la deuxième unité de commande (2) par le bus de coupleur interne (B1) et le bus entrée/sortie interne (B2) aux unités entrée/sortie orientées sur la sécurité (21) en utilisant le principe de communication du Canal Noir.

11. Utilisation du système de commande selon l'une quelconque des revendications précédentes en tant que système de commande d'un système d'automatisation plus important, en tant que dispositif de traitement décentralisé dans un tel système d'automatisation décentralisé plus important ou en tant qu'appareil d'automatisation autonome en liaison avec les appareils entrée/sortie couplables de façon décentralisée ou en tant qu'appareil d'automatisation central.
